# EUROPÄISCHE PATENTSCHRIFT

(11) **EP 1 133 540 B1**
(45) Veröffentlichungstag und Bekanntmachung des Hinweises auf die Patenterteilung: **08.01.2003**
(21) Anmeldenummer: 99950674.4
(22) Anmeldetag: 08.10.1999
(51) Int. Cl.: C10M 173/02, C10N 30/16

(54) **KETTENSCHMIERMITTEL FÜR FÖRDER- UND TRANSPORTANLAGEN**
CHAIN LUBRICANT FOR CONVEYOR AND TRANSPORT SYSTEMS
LUBRIFIANT POUR CHAINE D'INSTALLATIONS TRANSPORTEUSES

(30) Priorität: 13.10.1998 DE 19846991
(43) Veröffentlichungstag der Anmeldung: 19.09.2001
(73) Patentinhaber: Bactria Industriehygiene-Service GmbH & Co. KG, 67292 Kirchheimbolanden (DE)
(72) Erfinder: SPERLING, Michael, D-66482 Zweibrücken (DE); STROH, Günter, D-68219 Mannheim (DE); HIX, Heinrich, A-6103 Reith (AT); GUTKNECHT, Jürgen, D-55232 Alzey (DE)
(74) Vertreter: Zellentin, Wiger, Dipl.-Ing.
(86) Internationale Anmeldenummer: EP9907550
(87) Internationale Veröffentlichungsnummer: WO00022072

(56) Entgegenhaltungen:
- EP-A- 0 044 458
- EP-A- 0 359 145
- DE-A- 19 642 598
- PATENT ABSTRACTS OF JAPAN vol. 009, no. 241 (C-306), 27. September 1985 (1985-09-27) & JP 60 101195 A (MITSURU TSUCHIKURA), 5. Juni 1985 (1985-06-05)

## Beschreibung

Die vorliegende Erfindung bezieht sich auf Kettenschmiermittel für Förder- und Transportanlagen, insbesondere in der Lebensmittelindustrie, welche zum Schmieren, Reinigen und Desinfizieren der Transportketten geeignet sind. Des weiteren betrifft die Erfindung die Verfahren zur Anwendung dieser Kettenschmiermittel.

Die Erfindung betrifft vorzugsweise die Schmierung von Förder- und Transportketten in Abfüllanlagen von Lebensmitteln, vorzugsweise von Getränken, die in Glas- oder Kunststoffflaschen, Dosen, oder anderen Getränkecontainern abgefüllt werden.

In den Abfüllbetrieben müssen die obigen Behälter während des Befüllens zu verschiedenen Stationen transportiert werden, beispielsweise Reinigungsstationen, Füllstationen, Etikettierstationen, Verpackungsstationen. Dies geschieht üblicherweise mittels Förder- und Transportanlagen, welche üblicherweise aus Hygieneund Korrosionsschutzgründen aus Edelstahl bestehen, die Transportketten können jedoch auch aus Kunststoff sein. Solche Anlagen werden im folgenden als Förderanlagen bezeichnet.

Um die mechanische Beanspruchung von Behältern und Transportanlagen zu reduzieren, ist eine hinreichende Schmierung der Transportbänder notwendig, damit sich das Band ungehindert weiterbewegen kann, selbst wenn die Behälter auf dem Band zeitweise nicht vorwärtsbewegt werden können.

Falls die Förderanlagen nicht im erforderlichen Maße geschmiert sind, kann dies einerseits dazu führen, daß die Behälter umfallen oder andererseits dazu, daß sie nicht stoppen, obwohl die entsprechende Abfüll-, Reinigungs- oder Etikettenstation erreicht ist. Beide Arten von Störungen können zu längeren Standzeiten der Förderanlage und damit zu erheblichem Kapazitätsausfall führen. Andererseits darf die Schmierung nicht so stark ausfallen, daß die Behälter bereits bei geringen Gegenkräften vom Transportband nicht mehr mitgenommen werden, d.h. insbesondere beim Übergang von einem Förderband auf das andere, bei steigenden oder fallenden Bändern oder beim Einschieben in die Bearbeitungsstationen nicht ausreichend gefördert werden.

Neben der schmierenden Wirkung ist bei Förderanlagen in der Lebensmittelindustrie insbesondere auch eine reinigende und desinfizierende, insbesondere biostatische Wirkung der Kettenschmiermittel erforderlich.

Derzeit eingesetzte Kettenschmiermittel lassen sich im wesentlichen in 3 Hauptgruppen einteilen:
1. Schmiermittel auf Seifenbasis,
2. Schmiermittel auf Basis von Fettaminen und
3. Schmiermittel auf Basis von synthetischen Tensiden.

Die ursprünglich angewandte Schmierung auf Basis von Seifen war relativ problemlos anwendbar und ergab eine gute Schmierung und Reinigung, hatte jedoch den Nachteil, daß die Seifenbestandteile einen guten Nährboden für Mikroorganismen darstellen und andererseits Seifen empfindlich gegen hartes Wasser sind, so daß Komplexierungsmittel, beispielsweise Ethylendiamintetraessigsäure (EDTA) zusätzlich eingesetzt werden müssen. EDTA ist wiederum biologisch in den Klärsystemen nur schwer abbaubar.

Aus diesen Gründen werden heutzutage insbesondere Schmiermittelkonzentrate auf Basis von Fettaminen sowie amphoteren Tensiden (z.B. Alkylaminoalkylcarbon-säuren) verwendet (vgl. DE 36 31 953-A1 und WO 95/33808-A1). Da diese Amino-verbindungen selbst nur eine geringe biozide und reinigende Wirkung aufweisen, wird in der DE 36 31 953-A1 empfohlen, zusätzlich in regelmäßigen Abständen mit einer sauren Reinigungsflüssigkeit die Anlage zu reinigen und zu desinfizieren, was einen erheblichen Aufwand erfordert.

Aus der WO 96/02616-A1 sind ferner Kettenschmiermittel bekannt, welche aus Alkylpolyglycolphosphorsäureestern bestehen, denen zusätzlich aromatische Biozide oder quartäre Ammoniumverbindungen zugefügt sind.

Aus der EP 0 044 458-A1 und der DE 196 42 598-A1 sind Kettenschmiermittel auf Basis von Alkylpolyglycolcarbonsäuren bekannt, die allein oder in Mischung mit anderen Tensiden eine gute Schmier- und Reinigungswirkung aufweisen, in höherer Konzentration scheinen diese Produkte sogar eine gewisse biozide Wirkung aufzuweisen, obwohl in der DE 196 42 598-A1 angegeben wird, daß die Produkte sich sowohl aerob als auch anaerob in Kläranlagen gut abbauen lassen.

Aus der EP 0 359 145-A1 sind weiterhin seifenfreie Schmiermittelzubereitungen bekannt, welche Alkylbenzolsulfonate, alkoxylierte Alkanolphosphate und Alkancarbonsäuren sowie übliche Hilfsmittel enthalten und denen als Desinfektionsmittel Glutaraldehyd, Isothiazolin, Oxy-Verbindungen oder Pyridinthioloxid in 5 - 50 % der Tenside zugefügt sind.

Die Verwendung von quartären Ammoniumverbindungen als Desinfektionsmittel in Reinigungsmitteln, mit denen normalerweise mit Fettamin geschmierte Fördersysteme zwischendurch gereinigt werden, ist in der DE 36 31 953-A1 beschrieben. In der DE 39 05 548-A1 wird dagegen versucht, durch Verwendung von sekundären und/oder tertiären Aminen Schmiermittel einzusetzen, welche eine eigene biozide Wirkung zeigen. Obwohl diese Produkte eine eigene Reinigungswirkung aufweisen sollen, wird trotzdem empfohlen, mit organischen oder anorganischen Säuren von Zeit zu Zeit eine zusätzliche Reinigung durchzuführen.

Allen vorstehenden Vorschlägen gemeinsam ist, daß, soweit eine biozide Komponente in der Mischung enthalten ist, diese letztendlich ins Abwasser gelangt und, insbesondere wenn sie in höheren Konzentrationen auftritt, die aeroben und anaeroben biologischen Stufen in Kläranlagen stören kann.

Es stellte sich daher die Aufgabe, ein Kettenschmiermittel zu entwickeln, das nicht auf Basis kationischer oder amphoterer Tenside aufgebaut ist. Der biozide Inhaltsstoff des Kettenschmiermittels muß die, das Abfüllgut schädigenden, Keime sicher und schnell abtöten, aber andererseits gut biologisch abbaubar sein und darf Kläranlagen und Umwelt nicht negativ beeinflussen. Die Lösung wurde überraschenderweise in der Verwendung von synthetischen anionischen Tensiden mit Chlordioxid als Desinfektionsmittel in solchen Kettenschmiermitteln gefunden.

Überraschenderweise wurde festgestellt, daß Chlordioxid in den notwendigen geringen Konzentrationen die teilweise bekannte Schmierwirkung der enthaltenen Tenside deutlich erhöht, so daß deren Konzentration gesenkt werden kann, was eine weitere Entlastung der Umwelt darstellt.

Es ist bekannt, daß Chlordioxid zum Bleichen in der Textil-, Zellulose- und Papierindustrie sowie auch zur Wasserentkeimung, Desinfektion und Desodorierung übelriechender Abfälle und Abwässer, sowie zum Bleichen von Ölen, Fetten und Wachsen geeignet ist (vgl. RÖMPPS Chemie-Lexikon 9. Auflage, S. 711). Entsprechende wäßrige Lösungen werden daher in großem Maßstab hergestellt und eingesetzt. Diese sind jedoch nicht stabil und weisen einen unangenehm stechenden Geruch nach dem ausgasenden Chlordioxid auf, welches atemwegsreizend wirkt und daher üblicherweise nur in geschlossenen Gefäßen gehandhabt wird.

Die JP-A-60101195 (PAJ) beschreibt stabilisierte wässerige Lösungen oder Granulate, die Chlordioxid enthalten und zur Desinfektion von Schneid- und Bohrölen in der Metallindustrie eingesetzt werden können. Eine Verwendung in wässerigen Kettenschmiermitteln ist nicht beschrieben.

Überraschend wurde nun gefunden, daß die für eine antimikrobielle Wirkung notwendige Konzentration von Chlordioxid in den Kettenschmiermitteln so gering sein kann, daß ein merkliches Ausgasen nicht erfolgt. Andererseits erscheint es überraschend, daß die geringen Konzentrationen an Chlordioxid nicht von den sonstigen Inhaltsstoffen der Kettenschmiermittel, die demgegenüber in erheblichem Überschuß vorliegen, insbesondere durch die verwendeten Tenside, reduziert und damit inaktiviert werden. Eine Beeinflussung der Kläranlagen kann ausgeschlossen werden, da diese geringen Mengen von Chlordioxid durch sonstige, in den Abwässern vorkommenden leicht oxidierbare Stoffe doch so schnell reduziert werden, daß die aeroben und anaeroben biologischen Stufen von Kläranlagen nicht gestört werden. Da durch diese Reduktion praktisch nur noch Chloridionen übrigbleiben, beeinflußt diese Art der Desinfektion im Gegensatz zu den nach dem Stand der Technik benutzten Bioziden oder biozid wirkenden Tensiden die Umwelt nicht.

Für eine ausreichende Desinfektion von Transportketten reicht es aus, wenn die Kettenschmiermittet Chlordioxid in sehr geringer Konzentration enthalten. Eine Konzentration von 0,5 - 5 mg/l, insbesondere von etwa 1 - 3 mg/l hat sich besonders bewährt. Erst oberhalb von 5 mg/l ist ein schwacher Geruch von Chlordioxid merklich, der über 10 mg/l in schlecht belüfteten Räumen unangenehm deutlich wird. Eine völlig ausreichende Desinfektion der Transportketten ist gewährleistet, wenn die Transportkette bei jedem Umlauf erneut mit dem Kettenschmiermittel kontaktiert wird, was bei üblichen Transportgeschwindigkeiten (0,5 - 3 m/sec bei 40 m Länge) etwa alle 0,5 bis 3 min erfolgt. Die Kette kann dazu entweder ein entsprechendes Bad von Kettenschmiermittel durchlaufen oder wird vorzugsweise mit dem Kettenschmiermittel besprüht, wobei sich ein dünner Film des Kettenschmiermittels auf der Kette festsetzt.

Das wäßrige Kettenschmiermittel enthält synthetische Tenside und Hilfsstoffe in Mengen von 0,1 - 1,5 g/l, vorzugsweise 0,3- 1,0 g/l, als wäßrige Lösung, durch welche die notwendige Schmierwirkung erzielt wird. Als Tenside besonders bevorzugt sind Monoalkylpoly-alkylenglycolethercarbonsäuren der folgenden allgemeinen Formel (I):

R₁-(OC₂H₄)ₘ-(OC₃H₆)ₙ-O-(CH₂)ₚ-CHR₂-C(O)OR₃ (I)

worin R₁ einen gesättigten linearen oder verzweigten C₁-C₂₂Alkylrest, einen einfach oder mehrfach ungesättigten linearen oder verzweigten Alkenyl- oder Alkinylrest mit 2 bis 22 Kohlenstoffatomen oder einen ggf. einfach oder mehrfach durch C₁-C₂₂ Alkyl- oder Alkenyl- oder Alkinylgruppen substituierten Arylrest bedeutet,
m eine Zahl im Bereich von 0 bis 30,
n eine Zahl im Bereich von 0 bis 30,
p eine Zahl im Bereich von 1 bis 4,
R₂ eine Hydroxylgruppe oder ein Wasserstoff und
R₃ Wasserstoff, eine Methylgruppe oder ein Alkalimetall ist.

Weiterhin als Tenside besonders bevorzugt sind Alkylbenzolsulfonsäuren und ihre Salze der folgenden allgemeinen Formel (II):

R₄-C₆H₆-SO₃M (II)

worin R₄ einen gesättigten linearen oder verzweigten C₁-C₂₂ Alkylrest oder einen einfach oder mehrfach ungesättigten linearen oder verzweigten Alkenyl- oder Alkinylrest mit 2 bis 22 Kohlenstoffatomen bedeutet und M Wasserstoff oder ein Alkalimetall ist.

Weiterhin besonders bevorzugt sind Monoalkylpolyalkylenglycolphosphorsäuremono- oder -diester der folgenden allgemeinen Formel (III):

(R₅-(OC₂H₄)_{q}-(OC₃H₆)ᵣ-O)ₛ-PO₂R₆H (III)

worin R₅ einen gesättigten linearen oder verzweigten C₁-C₂₂ Alkylrest, einen einfach oder mehrfach ungesättigten linearen oder verzweigten Alkenyl- oder Alkinylrest mit 2 bis 22 Kohlenstoffatomen oder einen ggf. einfach oder mehrfach durch C₁-C₂₂ Alkyl- oder Alkenyl- oder Alkinylgruppen substituierten Arylrest bedeutet,
q eine Zahl im Bereich von 0 bis 30,
r eine Zahl im Bereich von 0 bis 30,
s 1 oder 2 ist,
R₆ eine Hydroxylgruppe ist, sofern s 1 ist und
R₆ entfällt, sofern s 2 ist.

Weiterhin können auch andere anionische und nichtionische Tenside der Mischung zugefügt werden. Fettamine, andere kationische Tenside und amphotere Tenside sind ausdrücklich nicht Bestandteil der Erfindung, da sie in üblicher Anwendungs-konzentration einen schädigenden Einfluß auf Kläranlagen ausüben können.

Als Hilfsstoffe sind insbesondere Polyethylenglycole gebräuchlich, über welche die Viskosität der Lösung und die Toleranz gegen hartes Wasser verbessert werden kann. Mengen von 0,5 - 5 g/l sind dabei brauchbar. Als Lösungsvermittler können weiterhin Alkohole oder Ether wie Isopropanol, Butylglycol, Dibutylglycol oder Ethylenglycolether eingesetzt werden. Darüber hinaus können der Mischung Säuren oder Basen zur Regulierung des pH-Werts, der bevorzugt in einem Bereich von 5 bis 8 liegen soll, zugefügt werden.

Aus ökonomischen Gründen ist es sinnvoll, die Kettenschmiermittel als Konzentrate herzustellen und erst für die Anwendung auf die obige Konzentration zu verdünnen, wobei gleichzeitig das desinfizierende Chlordioxid als wäßrige Lösung zugefügt wird. Die Konzentrate weisen üblicherweise Konzentrationen von etwa 2 - 30 Gew.-% Inhaltsstoffe und 98 - 70 Gew.-% Wasser auf, so daß die gewünschte Endkonzen-tration durch Zufügen der 100- bis 1000fachen Menge Wasser eingestellt werden kann.

Die Konzentration der Kettenschmiermittel in Anwendungslösungen muß so einge-stellt werden, daß sie den Reibwiderstand zwischen Fördergut und Transportkette deutlich reduzieren. Der Reibwiderstand wird über den sogenannten Reibwert definiert. Anwendungslösungen von Kettenschmiermitteln müssen einen Reibwert im Bereich von 0,1 - 0,2, vorzugsweise 0,11 - 0,15 aufweisen. Der Reibwert wird bestimmt, indem man Flaschen auf ein Transportband setzt, welches kontinuierlich mit der Schmiermittellösung eingesprüht wird und sich mit konstanter Geschwindig-keit bewegt. Man mißt den Druck, den die Flaschen in Transportrichtung auf ein fest stehendes Hindernis ausüben. Der Reibwert ergibt sich dann als Quotient aus dem gemessenen Druck und dem Gewicht der Flaschen in g.

Für reines Wasser als Kontrolle ergeben sich Reibwerte von 0,45 bis 0,5, für mit 0,1 - 3,0 % handelsüblichem Kettenschmiermittel versetztes Wasser Reibwerte von 0,1 bis 0,25.

Versuche mit unterschiedlichen Tensiden und unterschiedlichen Mengen von Chlordioxid sind in der folgenden Tabelle wiedergegeben. Die unterschiedlichen Tenside wurden dabei in Mengen von 1 - 4 g /10 l in Wasser gelöst und 0,55 mg/l, 1,36 mg/l, 5,45 mg/l bzw. 8,17 mg/l Chlordioxid zugefügt. Der pH-Wert der Lösung liegt bei ca. 7,5 +/- 0,5. Zum Vergleich werden einige Handelsprodukte mit aufgeführt, welche in der jeweils anwendungsüblichen Konzentration von 3 bzw. 5 g/l eingesetzt werden. Folgende Abkürzungen der Rohstoffe werden verwendet:
- T1:: C₁₆₋₁₈-Ethercarbonsäure mit einer Ethylenoxidgruppe
- T2:: C₁₆₋₁₈-Ethercarbonsäure mit 2 Ethylenoxidgruppen
- T3:: C₁₆₋₁₈-Ethercarbonsäure mit durchschnittlich 5 Ethylenoxidgruppen
- T4:: Lineare Alkyl(C₁₀₋₁₃)-benzolsulfonsäure
- T5:: Alkyl(C₁₂₋₁₈)-ethoxy(6-20 EO)-propoxy(unter 8 PO)-phosphorsäuremono- und -diester

- H₁:: Handelsprodukt auf Basis von Amphotensiden
- H₂:: Handelsprodukt auf Basis von Amin- und Essigsäure
- H₃:: Handelsprodukt auf Basis von Fettamin- und Essigsäure
- H₄:: Handelsprodukt auf Basis von Amin- und Milchsäure
- H₅;: Handelsprodukt auf Basis von Alkalifettsäuresalzen (Seife).

**Tabelle 1**

| | ClO₂ mg/l | | | | | |
|---|---|---|---|---|---|---|
| | | 0,0 mg/l | 0,55 mg/l | 1,36 mg/l | 5,45 mg/l | 8,17 mg/l |
| | Geruch: | ohne | ohne | ohne | schwach | deutlich |
| **Rohstoffe** | g/10 l Ansatz | Reibwert (Rbw) | | | | |
| T1 | 1 | 0,236 | | 0,192 | 0,333 | 0,365 |
| T1 | 2 | 0,164 | | 0,162 | 0,236 | 0,233 |
| T1 | 4 | 0,197 | 0,165 | 0,134 | 0,136 | 0,140 |
| T2 | 4 | 0,194 | | | 0,174 | |
| T3 | 4 | 0,271 | | | 0,135 | |
| T4 | 4 | 0,297 | | | 0,194 | |
| T5 | 4 | 0,194 | | | 0,120 | |

| **Mischungen von Tensiden** | | | | | | |
|---|---|---|---|---|---|---|
| T1/T4 | 2/2 | 0,151 | 0,133 | | 0,129 | |
| T2/T4 | 2/2 | 0,252 | | | 0,165 | |
| T3/T4 | 2/2 | 0,234 | | | 0,196 | |
| T1/T5 | 2/2 | 0,123 | 0,128 | | 0,122 | |
| T2/T5 | 2/2 | 0,143 | | | 0,122 | |
| T3/T5 | 2/2 | 0,211 | | | 0,183 | |

| **Handelsübliche Kettenschmiermittel** | | | | | | |
|---|---|---|---|---|---|---|
| H₁ | 30 | 0,280 | | | 0,365 | |
| H₂ | 30 | 0,138 | 0,136 | | 0,140 | |
| H₃ | 30 | 0,142 | | | 0,149 | |
| H₄ | 30 | 0,135 | | | 0,450 | |
| H₅ | 50 | 0,281 | | | 0,397 | |

In einem weiteren Versuch wurde die keimabtötende Wirkung anhand von häufig im Bereich von Abfüllanlagen vorkommenden Mikroorganismen untersucht. Zu diesem Zweck wurden eine Lösung aus 4 g Ethercarbonsäure T1 mit 0,1 - 0,5 mg ClO₂ /I versetzt und jeweils 90 ml einer so hergestellten Lösung mit 10 ml Bakterienlösung versetzt, welche eine Konzentration von ca. 10 000 Zellen / ml aufweist, so daß sich insgesamt eine Konzentration von 1 000 Zellen / ml ergibt, was üblichen Konzentrationen im Spülwasser entspricht. Zu den in den Tabellen angegebenen Zeiten wurden Proben gezogen und die Abnahme der Zellzahl mittels Verdünnungsreihen und Lebendtiterausplattierung (Drehtisch, Drigalsky-Spatel) untersucht. Die folgenden Tabellen zeigen, daß Bakterien bereits bei Konzentrationen von 0,3 mg/l sicher innerhalb von 5 min abgetötet werden, Hefezellen bei dieser Konzentration deutlich geschädigt und bei 0,5 mg/l ebenfalls vollständig abgetötet werden.

**Tabelle 2**

| Konzentration 0,1 mg ClO₂/l | | | | | |
|---|---|---|---|---|---|
| **Organismus** | **Kontaktzeit** | | | | |
| | 0 min | 5 min | 10 min | 20 min | 30 min |
| E. coli | 2050,00 | 1450,00 | 1030,00 | 1040,00 | 1010,00 |
| Hefe | 900,00 | 910,00 | 870,00 | 910,00 | 890,00 |
| Pectinatus | 1020,00 | - | - | - | - |
| Milchsäurebakterien | 1230,00 | 420,00 | 150,00 | 110,00 | 110,00 |
| Pediokokken | 1020,00 | 100,00 | 12,00 | - | - |

**Tabelle 3**

| Konzentration 0,15 mg ClO₂/l | | | | | |
|---|---|---|---|---|---|
| **Organismus** | **Kontaktzeit** | | | | |
| | 0 min | 5 min | 10 min | 20 min | 30 min |
| E. coli | 1000,00 | - | - | - | - |
| Hefe | 1050,00 | 100,00 | - | - | - |
| Pectinatus | 1820,00 | - | - | - | - |
| Milchsäurebakterien | 1710,00 | - | - | - | - |
| Pediokokken | 570,00 | 400,00 | 60,00 | - | - |

**Tabelle 4**

| Konzentration 0,3 mg ClO₂/l | | | | | |
|---|---|---|---|---|---|
| **Organismus** | **Kontaktzeit** | | | | |
| | 0 min | 5 min | 10 min | 20 min | 30 min |
| E. coli | 1150,00 | - | - | - | - |
| Hefe | 950,00 | 90,00 | - | - | - |
| Pectinatus | 920,00 | - | - | - | - |
| Milchsäurebakterien | 1200,00 | - | - | - | - |
| Pediokokken | 900,00 | - | - | - | - |

**Tabelle 5**

| Konzentration 0,5 mg ClO₂/l | | | | | |
|---|---|---|---|---|---|
| **Organismus** | **Kontaktzeit** | | | | |
| | 0 min | 5 min | 10 min | 20 min | 30 min |
| E. coli | 1050,00 | - | - | - | - |
| Hefe | 900,00 | - | - | - | - |
| Pectinatus | 960,00 | - | - | - | - |
| Milchsäurebakterien | 1200,00 | - | - | - | - |
| Pediokokken | 1000,00 | - | - | - | - |

Chlordioxid zersetzt sich insbesondere in Gegenwart organischer Substanz zu unwirksamen Verbindungen wie Chloriden.

Im Vorversuch wurde daher die Abbaugeschwindigkeit von Chlordioxid im offenen gerührten System ermittelt, um die Verhältnisse einer Transportkette möglichst zu simulieren. Dazu wurde in einem 2-Liter-Becherglas wiederum eine Lösung aus 4 g/10 I T1 hergestellt und mit 5, 3 bzw. 1 mg / I Chlordioxid versetzt. Jeweils 100 ml dieser Lösung wurden in dem Becherglas eingefüllt und mit einem schnellaufenden Flügelrührer 4 Stunden lang gerührt. Der Chlordioxidgehalt wird mit einer selektiven Elektrode gemessen. Die Meßergebnisse sind in der folgenden Tabelle wiedergegeben.

**Tabelle 6**

| Abbaugeschwindigkeit von Chlordioxid | | | | | |
|---|---|---|---|---|---|
| Ausgangskonzentration ClO₂ mg/l | Zeit (Minuten) | | | | |
| | 30 | 60 | 120 | 180 | 240 |
| 5 | 3,8 | 3,5 | 3,1 | 2,8 | 2,4 |
| 3 | 2,5 | 2,1 | 1,5 | 1 | 0,5 |
| 1 | 0,8 | 0,6 | 0,5 | 0,3 | 0,2 |

Es ergibt sich auch nach vier Stunden eine Abnahme der Konzentration auf immer noch wirksame Konzentrationen.

## Patentansprüche

1. Kettenschmiermittel für Förder- und Transportanlagen aus Wasser, Tensiden und Desinfektionsmitteln sowie üblichen Hilfs- und Zusatzstoffen, **dadurch gekennzeichnet, daß** als Tensid ein synthetisches anionisches Tensid in einer Menge von 0,1 - 1,5 g/l und als Desinfektionsmittel Chlordioxid in einer Menge von 0,5 - 5 mg/l verwendet wird.

2. Kettenschmiermittel gemäß Anspruch 1, **dadurch gekennzeichnet, daß** als synthetisches Tensid eine Monoalkylpolyalkylenglycolethercarbonsäure der folgenden allgemeinen Formel (I) enthalten ist.
R₁-(OC₂H₄)ₘ-(OC₃H₆)ₙ-O-(CH₂)ₚ-CHR₂-C(O)OR₃ (I)
worin R₂ einen gesättigten linearen oder verzweigten C₁-C₂₂ Alkylrest, einen einfach oder mehrfach ungesättigten linearen oder verzweigten Alkenyl- oder Alkinylrest mit 2 bis 22 Kohlenstoffatomen oder einen ggf. einfach oder mehrfach durch C₁-C₂₂ Alkyl- oder Alkenyl- oder Alkinylgruppen substituierten Arylrest bedeutet,
m eine Zahl im Bereich von 0 bis 30,
n eine Zahl im Bereich von 0 bis 30,
p eine Zahl im Bereich von 1 bis 4,
R₂ eine Hydroxylgruppe oder ein Wasserstoff und
R₃ Wasserstoff, eine Methylgruppe oder ein Alkalimetall ist.

3. Kettenschmiermittel gemäß Anspruch 1, **dadurch gekennzeichnet, daß** als synthetisches Tensid eine Alkylbenzolsulfonsäure oder eines ihrer Salze der folgenden allgemeinen Formel (II) enthalten ist.
R₄-C₆H₆-SO₃M (II)
worin R₄ einen gesättigten linearen oder verzweigten C₁-C₂₂ Alkylrest odereinen einfach oder mehrfach ungesättigten linearen oder verzweigten Alkenyl- oder Alkinylrest mit 2 bis 22 Kohlenstoffatomen bedeutet und M Wasserstoff oder ein Alkalimetall ist.

4. Kettenschmiermittel gemäß Anspruch 1, **dadurch gekennzeichnet, daß** als synthetisches Tensid ein Monoalkylpolyalkylenglycolphosphorsäuremono- oder -diester der allgemeinen Formel (III) enthalten ist.
(R₅-(OC₂H₄)_{q}-(OC₃H₆)ᵣ-O)ₛ-PO₂R₆H (III)
worin R₅ einen gesättigten linearen oder verzweigten C₁-C₂₂ Alkylrest, einen einfach oder mehrfach ungesättigten linearen oder verzweigten Alkenyl- oder Alkinylrest mit 2 bis 22 Kohlenstoffatomen oder einen ggf. einfach oder mehrfach durch C₁-C₂₂ Alkyl- oder Alkenyl- oder Alkinylgruppen substituierten Arylrest bedeutet,
q eine Zahl im Bereich von 0 bis 30,
r eine Zahl im Bereich von 0 bis 30,
s 1 oder 2 ist,
R₆ ein Wasserstoff ist, sofern s 1 ist und
R₆ entfällt, sofern s 2 ist.

5. Kettenschmiermittel gemäß Anspruch 1, **dadurch gekennzeichnet, daß** sie Mischungen der in den Ansprüchen 2 - 4 genannten Tenside enthalten.

6. Kettenschmiermittel gemäß den Ansprüchen 1 - 5, **dadurch gekennzeichnet, daß** zusätzlich andere anionische und nichtionische Tenside und sonstige Zusatz- und Hilfsstoffe zugesetzt werden.

7. Kettenschmiermittel gemäß einem der Ansprüche 1-6, **dadurch gekennzeichnet, daß** die Tenside in einer Konzentration von 0,2 - 0,5 g/l verwendet werden.

8. Verfahren zum Schmieren von Ketten der Förder- und Transportbänder, **dadurch gekennzeichnet, daß** man ein Kettenschmiermittel gemäß einem der Ansprüche 1 - 7 aus einem Konzentrat der Tenside, Zusatz- und Hilfsstoffe und einer frisch bereiteten Lösung von Chlordioxid und der für die Einstellung der gewünschten Konzentration notwendigen Menge Wasser zusammenmischt und diese Mischung kontinuierlich oder in Intervallen auf die Transportketten aufbringt.

9. Verfahren gemäß Anspruch 8, **dadurch gekennzeichnet, daß** jede Stelle der Transportkette bei ihrem Umlauf in Zeitintervallen von 0,5 - 3 Minuten mit frischem Kettenschmiermittel kontaktiert wird.

## Claims

1. Chain lubricant for conveyer and transport systems of water, tensides end disinfection agents, as well as usual adjuvant and additive materials, **characterised in that** as tenside there is used an synthetic anionic tenside in an amount of 0.1 - 1.5 g/l and, as disinfection agent, chlorine dioxide in an amount of 0.5 - 5 mg/l.

2. Chain lubricant according to claim 1, **characterised in that**, as synthetic tenside, there is contained a monoalkylpolyalkyleneglycol ether carboxylic acid of the following general formula (I)
R₁-(OC₂H₄)ₘ-(OC₃H₆)ₙ-O-(CH₂)ₚ-CHR₂-C(O)OR₃ (I)
wherein R₂ signifies a saturated linear or branched C₁-C₂₂-alkyl radical, a mono- or polyunsaturated linear or branched alkenyl or alkynyl radical with 2 to 22 carbon atoms or an aryl radical possibly substituted one or more times by C₁-C₂₂-alkyl or alkenyl or alkynyl groups,
m a number in the range of 0 to 30,
n a number in the range of 0 to 30,
p a number in the range of 1 to 4,
R₂ a hydroxyl group or a hydrogen and
R₃ hydrogen, a methyl group or an alkali metal.

3. Chain lubricant according to claim 1, **characterised in that**, as synthetic tenside, there is contained an alkylbenzenesulphonic acid or one of its salts of the following general formula (II)
R₄-C₆H₆-SO₃M (II)
wherein R₄ is a saturated linear or branched C₁-C₂₂-alkyl radical or a mono- or poly-unsaturated linear or branched alkenyl or alkynyl radical with 2 to 22 carbon atoms and M is hydrogen or an alkali metal.

4. Chain lubricant according to claim 1, **characterised in that**, as synthetic tenside, there is contained a monoalkylpolyalkyleneglycol phosphoric acid mono or diester of the general formula (III)
(R₅-(OC₂H₄)_{g}-(OC₃H₆)ᵣ-O)ₛ-PO₂R₆H (III)
wherein R₅ signifies a saturated linear or branched C₁-C₂₂-alkyl radical, a mono- or polyunsaturated linear or branched alkenyl or alkynyl radical with 2 to 22 carbon atoms or an aryl radical possibly substituted one or more times by C₁-C₂₂-alkyl or alkenyl or alkynyl groups,
q is a number in the range of 0 to 30,
r a number in the range of 0 to 30,
s is 1 or 2,
R₆ is hydrogen insofar as s is 1 and
R₆ is not present insofar as s is 2.

5. Chain lubricant according to claim 1, **characterised in that** it contains mixtures of the tensides mentioned in claims 2 - 4.

6. Chain lubricant according to claims 1 - 5, **characterised in that** additionally other anionic and nonionic tensides and other additive and adjuvants materials are added.

7. Chain lubricant according to one of claims 1 - 6, **characterised in that** the tensides are used in a concentration of 0.2 - 0.5 g/l.

8. Process for the lubrication of chains of convey or and transport bands, **characterised in that** one mixes together a chain lubricant according to one of claims 1 - 7 of a concentrate of the tensides, additive and adjuvant materials and a freshly prepared solution of chlorine dioxide and the amount of water necessary for the adjustment of the desired concentration and applies this mixture to the transport chain continuously or at intervals.

9. Process according to claim 8, **characterised in that** each position of the transport chain is, in the case of its circulation, contacted with fresh chain lubricant at time intervals of 0.5 - 3 minutes.

## Revendications

1. Lubrifiants de chaînes pour des installations d'acheminement et de transport, constitués par de l'eau, des agents tensioactifs et des désinfectants, ainsi que par des adjuvants et des additifs habituels, **caractérisé en ce qu'**on utilise, à titre d'agent tensioactif, un agent tensioactif anionique synthétique en une quantité de 0,1 à 1,5 g/L et à titre de désinfectant du dioxyde de chlore en une quantité de 0,5 à 5 mg/litre.

2. Lubrifiants de chaînes selon la revendication 1, **caractérisés en ce qu'**ils contiennent, à titre d'agent tensioactif synthétique, un acide carboxylique d'éther de monoalkylpolyalkyléneglycol répondant à la formule générale (I)
R₁-(OC₂H₄)ₘ-(OC₃H₆)ₙ-O-(CH₂)ₚ-CHR₂-C(O)OR₃ (I)
dans laquelle R₁ représente un radical alkyle en C₁-C₂₂ saturé à chaîne droite ou ramifiée, un radical alcényle ou alcynyle une ou plusieurs fois insaturé, à chaîne droite ou ramifiée contenant de 2 à 22 atomes de carbone ou encore un radical aryle portant le cas échéant un ou plusieurs substituants alkyle ou alcényle ou alcynyle en C₁-C₂₂,
m représente un nombre dans la plage de 0 à 30,
n représente un nombre dans la plage de 0 à 30,
p représente un nombre dans la plage de 1 à 4,
R₂ représente un groupe hydroxyle ou un atome d'hydrogène, et
R₃ représente un atome d'hydrogène, un groupe méthyle ou un métal alcalin.

3. Lubrifiants de chaînes selon la revendication 1, **caractérisés en ce qu'**ils contiennent, à titre d'agent tensioactif synthétique, un acide alkylbenzènesulfonique ou un de ses sels répondant à la formule générale (II)
R₄-C₆H₆-SO₃M (II)
dans laquelle R₄ représente un radical alkyle en C₁-C₂₂ saturé à chaîne droite ou ramifiée, ou un radical alcényle ou alcynyle une ou plusieurs fois insaturé, à chaîne droite ou ramifiée contenant de 2 à 22 atomes de carbone et M représente un atome d'hydrogène ou un métal alcalin.

4. Lubrifiants de chaînes selon la revendication 1, **caractérisés en ce qu'**ils contiennent, à titre d'agent tensioactif synthétique, un monoester ou un diester d'acide phosphorique de monoalkylpolyalkylèneglycol répondant à la formule générale (III)
(R₅-(OC₂H₄)_{q}-(OC₃H₆)ᵣ-O)ₛ-PO₂R₆H (III)
dans laquelle R₅ représente un radical alkyle en C₁-C₂₂ saturé à chaîne droite ou ramifiée, un radical alcényle ou alcynyle une ou plusieurs fois insaturé, à chaîne droite ou ramifiée contenant de 2 à 22 atomes de carbone ou encore un radical aryle portant le cas échéant un ou plusieurs substituants alkyle ou alcényle ou alcynyle en C₁-C₂₂,
q représente un nombre dans la plage de 0 à 30,
r représente un nombre dans la plage de 0 à 30,
s représente 1 ou 2,
R₆ représente un atome d'hydrogène, pour autant que s soit égal à 1, et
R₆ est absent pour autant que s soit égal à 2.

5. Lubrifiants de chaînes selon la revendication 1, **caractérisés en ce qu'**ils contiennent des mélanges des agents tensioactifs mentionnés dans les revendications 2 - 4.

6. Lubrifiants de chaînes selon l'une quelconque des revendications 1 à 5, **caractérisés en ce qu'**on leur ajoute en outre d'autres agents tensioactifs anioniques et non ioniques et d'autres additifs et adjuvants.

7. Lubrifiants de chaînes selon l'une quelconque des revendications 1 à 6, **caractérisés en ce qu'**on utilise les agents tensioactifs en une concentration de 0,2 à 0,5 g/litre.

8. Procédé pour la lubrification de chaînes de bandes d'acheminement et de transport, **caractérisé en ce qu'**on mélange de manière intime un lubrifiant de chaînes selon l'une quelconque des revendications 1 à 7 constitué par un concentrat d'agents tensioactifs, d'additifs et d'adjuvants et par une solution fraîchement préparée de dioxyde de chlore et la quantité d'eau requise pour le réglage de la concentration désirée et on applique ce mélange, en continu ou par intervalles, sur les chaînes transporteuses.

9. Procédé selon la revendication 8, **caractérisé en ce qu'**on met en contact chaque endroit de la chaîne transporteuse, lors de la rotation de cette dernière, à des intervalles de temps de 0,5 à 3 minutes avec du lubrifiant de chaîne frais.
